# EUROPEAN PATENT APPLICATION

(11) **EP 1 348 673 A1**
(43) Date of publication of application: **01.10.2003**
(21) Application number: 02076132.6
(22) Date of filing: 25.03.2002
(51) Int. Cl.: C03C 17/00

(54) **Method of forming a coating film**

(71) Applicant: Glaverbel, 1170 Bruxelles (Watermael-Boitsfort) (BE)
(72) Inventor: The designation of the inventor has not yet been filed
(74) Representative: Farmer, Guy

(57) **Abstract**

The method comprises the steps of applying a masking agent at part of a surface of the substrate, depositing the coating film over at least part of the surface of the substrate which is covered by the masking agent and over at least part of the surface of the substrate which is free of the masking agent and removing the masking agent from the substrate. The masking agent is preferably removed by the application of water.

## Description

The present invention relates to masking part of a substrate's surface to facilitate selectively coating desired portions of the substrate.

Whilst the invention will be described with particular reference to masking portions of glazings or glass sheets it may also be used with other substrates.

In a coated car windscreen, it may be desired to provide an non-coated band around the periphery of the windscreen to reduce the likelihood of corrosion of the coating by ingress of moisture. Such a non-coated band may also provide electrical isolation between the edge of the windscreen and the coating layer if the windscreen's coating layer is electrically heatable and provide a portion at which electrical connectors may be arranged. A non-coated data transmission window may also be provided in the coated glazing, for example for the passage of infra-red or other data signals. Selectively coating desired areas of the glazing may also facilitate incorporation of heating systems, antennas and sensors.

US patent 5,492,750 describes the use of reusable rigid, metal masks positioned over a glass substrate prior to depositing a coating layer so as to provide non-coated portions. Such masks are inconvenient to manipulate, require regular cleaning and are prone to produce an undesirable ghosting effect rather than a clean demarcation between coated and non-coated portions. A separate set of masks comprising a number of individual masks for each pattern of coating to be deposited is required for industrial production.

US patent 5,713,986 describes the use of a water soluble resist material which is applied in a predetermined pattern over a substrate prior to the deposition of a coating layer. This resist material and the overlaying material are dissolved away so as to provide non-coated portions. The dissolution of the resist material requires applying water at high temperature which may be costly when used in a large scale process.
The resist material includes substances such as a water soluble film former, a surfactant, a rinsing agent and one or more solvents. The total weight percentage of the film-former, the surfactant and the rinsing agent is generally kept low, thereby providing a resist material which has a substantially low viscosity. When using screen-printing to apply the resist material, it is necessary to add a film thickener to increase the viscosity of the resist material. These film-thickeners may be insoluble in water at high temperature and thus difficult to remove from the substrate. They may react with the resist material and for example may clog the screen used for the printing. They may also have a limited shelf life which requires applying the masking agent within 24 hours after mixing the materials.
All these features cause handling and cost problems when using such a resist material in a large scale process for the manufacture of coated substrates.

According to one aspect, the present invention provides a method of forming a coating film at part of a surface as defined in Claim 1.

The substances may be insoluble or substantially insoluble in water.

The masking agent comprising one or more of these substances may require in certain cases the addition of a film thickener or, on the other hand, the addition of a diluant such as water to afford a viscosity which may permit an easy or precise application, for example when screen-printing is used.

Where the masking agent comprises a latex, a styrene-butadiene copolymer is preferred. This is because the masking agent which comprises styrene-butadiene copolymer may easily be removed from the substrate at the end of the process.

According to another aspect, the present invention also provides a method of forming a coating film at part of a surface of a substrate as defined in Claim 2.

The masking agent may be deposited at the surface of the substrate in the form of a layer or film or liquid or paste; it may be deposited in a state in which it is substantially unpolymerised. It may be subsequently transformed so as to assume a gel state, for example, by exposure to atmospheric conditions and/or by heating and/or by reacting with a substance which reaction may promote the formation of the gel state.
When the masking agent is in a gel state it may have a low cohesion and/or a low adherence to the substrate; this may facilitate its removal from the substrate.

According to a further aspect, the present invention provides a method of forming a coating film at part of a surface of a substrate as defined in Claim 3.
The masking agent comprising an emulsion may be easily applied over part of the substrate.

Incorporating a filler into the masking agent may allow the chemical and/or the physical properties of the masking agent to be modified and/or controlled.

The masking agent may be prepared in concentrated form, adapted to be diluted or thinned for application to a substrate. The masking agent in its concentrated form preferably comprises at least 10% by weight of a filler. The filler may comprise a pigment, for example, carbon black.

According to yet another aspect, the present invention provides a method of forming a coating film at part of a surface of a substrate as defined in Claim 5.

The filler may comprise an alkaline-earth metal salt, for example calcium carbonate. One advantage of calcium carbonate is that in the context of the present invention it does not react chemically with the majority of the substances comprised in the masking agent whilst modifying the physical properties of the masking agent, for example its adherence to the substrate .
The filler may facilitate removal of the masking agent from the substrate. In particular, the filler may encourage the masking agent to break up into small fragments or pieces when removed from the substrate rather than remaining in the form of a strip or a ribbon. This may facilitate automation of the removal process.

The masking agent, in its concentrated form, may comprise a polyvinyl compound, preferably less than 40% by weight of a polyvinyl compound.

The masking agent preferably comprises a plasticiser.

The plasticiser may penetrate into particles of one or more of the substances comprised in the masking agent, for example, when a gel state of the masking agent occurs. These particles may tend to swell up creating thereby a coherent mass. This mass may have a lower mechanical strength than the mass obtained at the fusion state of the masking agent.

The plasticiser preferably comprises a dialkylphtalate, for example, dioctylphtalate. Dioctylphtalate may provide at the temperature of the gel state an homogeneous film which has less propensity to decompose under vacuum and/or heating conditions. The substances freed during such a decomposition may damage the coater when applying under vacuum the coating film over the masking agent.
The dialkylphtalate may also facilitate the preparation of the masking agent in the form of a fluid paste which is easily applied over the substrate.

The masking agent may comprise a solvent, for example a solvent selected from the group consisting of organic solvents, preferably alcohol solvents, aromatic solvents, aliphatic solvents or water and combinations of two or more of these solvents.
The type and the quantity of solvent may be used to control the viscosity of the masking agent.

The masking agent, in its concentrated form, may have a solvent content comprised between 15% by weight and 60% by weight, preferably between 45% by weight and 60% by weight.

Water may be added to the masking agent in its concentrated form before its application over part of a surface of the substrate. It is preferred that between 15% and 50% volume of water to volume of masking agent (v/v), preferably 18% v/v, be added to the masking agent.

The masking agent may comprise a retarder which may prevent the masking agent from drying too fast before being applied over the substrate. The retarder may be a solvent which has high boiling point such as for example, water or a plasticiser.

The viscosity of the masking agent will preferably be comprised between 100 and 250,000 centipoises, preferably between 1,000 and 80,000 centipoises, preferably between 14,000 and 55,000 centipoises. This range of viscosity may facilitate application of the masking agent to the substrate, for example by printing, screen-printing and particularly by silk screen-printing.
The viscosity may be measured on a Brookfield DV II+ apparatus with a RV06 needle at a temperature of 23°C and at a speed of 10 rounds per minute.

The masking agent may be applied over part of the surface of a substrate by hand, by spray, by using a roller, a brush, a pad or by printing.

It is preferred to apply the masking agent over part but not the whole surface of the substrate by passing the masking agent through a screen, for example a fine silk, nylon or polyester mesh which has certain areas which are blocked to provide a pattern. This method allows very small portions of the substrate to be covered and a wide variety of patterns to be obtained.
The screen or mesh may comprise between 30 and 150 threads per centimeter, preferably less than 100 threads per centimeter, more preferably less than 50 threads per centimetre of mesh. This may allow a detailed pattern to be printed whilst avoiding the screen or mesh to become blocked.

Once the masking agent is applied over the substrate, it may be dried. The drying may occur at room temperature or by heating the substrate in a drying oven.
The masking agent may be heated at a temperature of less than 200°C, preferably at a temperature between 100°C and 150°C for not more than 10 minutes and more preferably for less than 5 minutes.
The drying of the masking agent may enable the evacuation of any volatile substances comprised in the masking agent which substances could adversely affect the subsequent deposition of the coating film.

The layer of the masking agent, when applied to the substrate, preferably has a thickness comprised between 5 µm and 100 µm, preferably between 10 µm and 40 µm.
This range of thickness may avoid the effect of ghosting when the coating film is deposited over the masking agent. The layer having this thickness may conveniently be applied to the substrate by screen printing techniques. The layer having this thickness may be sufficiently resistant to remain in place during handling of the substrate whilst being adapted to be removed from the substrate when desired.

The adherence of the masking agent to the substrate may be measured by a tape test particularly, after the drying step of the method when such a step is used. This test consists of the application of a piece of adhesive tape over part of the surface of the masking agent and subsequently pulling this tape away from the substrate. In the context of the present invention, the tape is Permacel. If the tape removes all the masking agent, the adherence is considered low; if the tape removes part of the masking agent, the adherence is considered medium; and if the tape doesn't remove the masking agent, the adherence is considered high.

The substrate may be glass, for example a sheet of flat glass, particularly a sheet of flat glass intended for subsequent use as or incorporated in an architectural or vehicle glazing panel. Alternatively, the substrate may be a rigid or flexible plastics sheet material which may equally be intended for subsequent use as or incorporated in an architectural or vehicle glazing panel. For example, the substrate may be a PET or other plastics sheet material adapted to receive a coating layer and to be laminated or otherwise incorporated in a glazing panel.

After the film coating has been deposited the masking agent which is covered by the coating film may be removed from the substrate, so as to provide a portion of the substrate substantially free of the coating film.
The masking agent which is covered by the coating film may be removed mechanically, for example by brushing, or be transformed by heating or by applying UV light; it may also be removed by the application of water on the substrate. The water may partially dissolve the masking agent but will preferably act mechanically to break the masking agent into small fragments or pieces.

The removal of the masking agent may be achieved by hand after the coating has been applied over the substrate or may be automated and included in the process of manufacture of the coated substrate. In the latter case, the masking agent is preferably removed by the application of water through one or more nozzles which may be located at a distance of less than 25 cm, preferably at a distance of about 15 cm from the substrate. The water may be applied at a pressure of less than 50 bars, preferably less than 25 bars, more preferably less than 13 bars.
When the masking agent is removed in the form of strips or bands from the substrate during the manufacturing process, these strips or bands may block the rollers on which the substrate travels and/or may be transferred by the rollers to another coated substrate.

Application of water as described in Claim 16 may break at least 80% by weight of the masking agent into small fragments or pieces which preferably have a surface of less than 10 square millimeter, more preferably less than 5 square millimeter. When the masking agent breaks into small fragments or pieces, these are entrained by the water away from the substrate and may fall through a screen, thereby not interfering in the manufacturing process.

The removal of the masking agent may be preceded by a pre-washing treatment with water at low or high temperature, for example for a duration of not more than 1 minute. The pre-washing may consist of applying water such that it forms a film over the whole surface of the substrate. The temperature of the water may be between 10°C and 100°C, preferably between 15°C and 65°C. The pre-washing of the substrate may facilitate the subsequent removal of the masking agent.

The coating film may be a solar control coating film and/or an infra red reflecting coating film and/or a low emissivity coating film and/or an anti-reflective coating film. A solar control film as used herein refers to a coating film which increases the selectivity of the substrate i.e. the ratio of the proportion of incident visible radiation transmitted through the substrate to the proportion of incident solar energy transmitted through the substrate.
The coating film may be transparent or substantially transparent; alternatively it may be opaque.
The coating film may be deposited by a vacuum deposition technique, for example by magnetron sputtering. This is preferably the case when the masking agent is an enamel. Alternatively, the coating film may be pyrolytically formed, for example by chemical vapour deposition or formed in some other way. The coating film is preferably applied over the entire surface of the substrate.

In all the methods described, the substrate may be glass, for example a sheet of flat glass, particularly a sheet of flat glass intended for subsequent use as or incorporated in an architectural or vehicle glazing panel. Alternatively, the substrate may be a rigid or flexible plastics sheet material which may equally be intended for subsequent use as or incorporation in an architectural or vehicle glazing panel.

Non-coated portions of the substrate may be located at the periphery of the substrate. In the case of a windscreen, for example, this may reduce the likelihood of corrosion of the coating by ingress of moisture. Non-coated portions may also provide electrical isolation between the edge of the substrate and the coating layer if the windscreen's coating layer is electrically heatable and provide a portion at which electrical connectors may be arranged.

The present invention also relates to the use of any of the methods described here above for the manufacture of a glazing panel which has a substantially non-coated peripheral portion.

The following terms as used herein are intended to have the meaning set out below :
Percentage (%) by weight of a substance : ratio of the weight of the substance to the total weight of masking agent in its concentrated form, multiplied by 100.
Latex : an aqueous emulsion comprising one or more polymers and, optionally, one or more pigments.
Emulsion : a heterogeneous liquid-liquid system comprising a dispersed aqueous phase and at least one phase comprising particles of one or more polymers and/or of one or more solvent. These particles may be spherical and preferably have a diameter of 0.1 µm to 9 µm.
Gel state : a physical state of the masking agent in which the masking agent is in a state of partial but not complete polymerisation. The temperature at which this state occurs depends upon the nature of the substances comprised in the masking agent.
Filler : a material which acts on the mechanical and/or chemical properties of the masking agent. Preferably, the filler is not reactive with the other substances of the masking agent.
Resin : a complex organic substance which is in a solid or semi-solid form and has no definite fusion point.
Plasticiser : a liquid or a solid which separates the particles of the substances comprised in the masking agent. The plasticiser is preferably chemically stable, not too volatile and does not modify the properties of the other substances comprised in the masking agent. The plasticiser may influence the viscosity of the masking agent.
Retarder : a substance which may be added to the masking agent in order to slow up the reactions which can occur between the substances comprised in the masking agent.

We illustrate the present invention by means of the following examples which should not be considered as a limitation to the present invention.

### EXAMPLES

### Example 1

A masking agent which contains 23% by weight of a mixture comprising polyvinyl chloride and dioctylphtalate, 25% by weight of calcium carbonate, less than 4% by weight of carbon black and magnesium silicate, and 48% by weight of 1,2-propyleneglycol, acetone, 2-ethylhexanol and heavy aliphatic solvents is prepared. The resulting masking agent has a viscosity of 14,400 centipoises. The masking agent is screen-printed over part of a rectangular glass sheet through a 32 threads per centimetre mesh to form a band about 30 mm wide which is intended to form a peripheral band of a windscreen which will subsequently be cut from the rectangular glass sheet. The glass sheet is subsequently dried in a drying oven at a temperature of 120°C for 1 minute. The glass sheet is then conveyed to a coater, where a coating stack formed from a sequence of layers is deposited by magnetron vacuum sputtering in the form dielectric/barrier/silver/barrier/dielectric. The substrate is pre-washed by application of water at a temperature of about 15°C during 30 seconds and is further conveyed under one ramp equipped with nozzles which are placed at a distance of 20 cm from the substrate. Application of water is achieved through these nozzles at a pressure of 12 bars. The masking agent covered by the coating film is thereby totally removed from the substrate and provides the desired patterned coated substrate.

### Example 2

A masking agent which contains 24% by weight of a mixture comprising polyvinyl chloride, dioctylphtalate, ethylhexylphtalate and hydroxyethyl cellulose, 25% by weight of calcium carbonate, less than 3% by weight of carbon black and magnesium silicate, and 48% of a mixture of 1,2-propyleneglycol, tetraethylene glycol, propylglycol, xylene, 2-ethylhexanol and heavy aliphatic solvents is prepared. 20% v/v of water are added to the masking agent to afford a solution which has a viscosity of 54,400 centipoises. The solution is screen-printed over a glass sheet through a 32 threads per centimetre mesh to provide a desired pattern. The glass sheet is subsequently dried in a drying oven at a temperature of 120°C for 1 minute. The glass sheet is then conveyed to a coater, where a coating stack formed from a sequence of layers is deposited by magnetron vacuum sputtering in the form dielectric/barrier/silver/barrier/dielectric The substrate is pre-washed by application of water at a temperature of about 15°C during 30 seconds and is further conveyed under two ramps equipped of nozzles which are placed at a distance of 15 cm from the substrate. Application of water is achieved through these nozzles at a pressure of 20 bars. The masking agent covered by the coating film is thereby totally removed from the substrate to provide the desired patterned coated substrate.

### Examples 3-7 (Table I)

Examples 3 to 7 illustrate other compositions of the masking agent which are applied and removed under the same conditions unless otherwise specified. The comparison between examples 3 and 4 shows that the masking agent is removed more easily when the percentage by weight of calcium carbonate comprised in the masking agent is greater.
The pressure of the water applied to remove the masking agent is 20 bars except in the case of example 4 where it is of 12 bars. In this example, the nozzle-substrate distance is of 20 cm whereas it is 15 cm in the other examples.

According to particular embodiments of the invention a masking agent comprising a latex comprising a styrene-butadiene copolymer or hydroxypropyl cellulose or a polyvinyl acetate or a polybutylmetacrylate is applied over the substrate. A masking agent according to any of these particular embodiments is totally removed from the substrate.

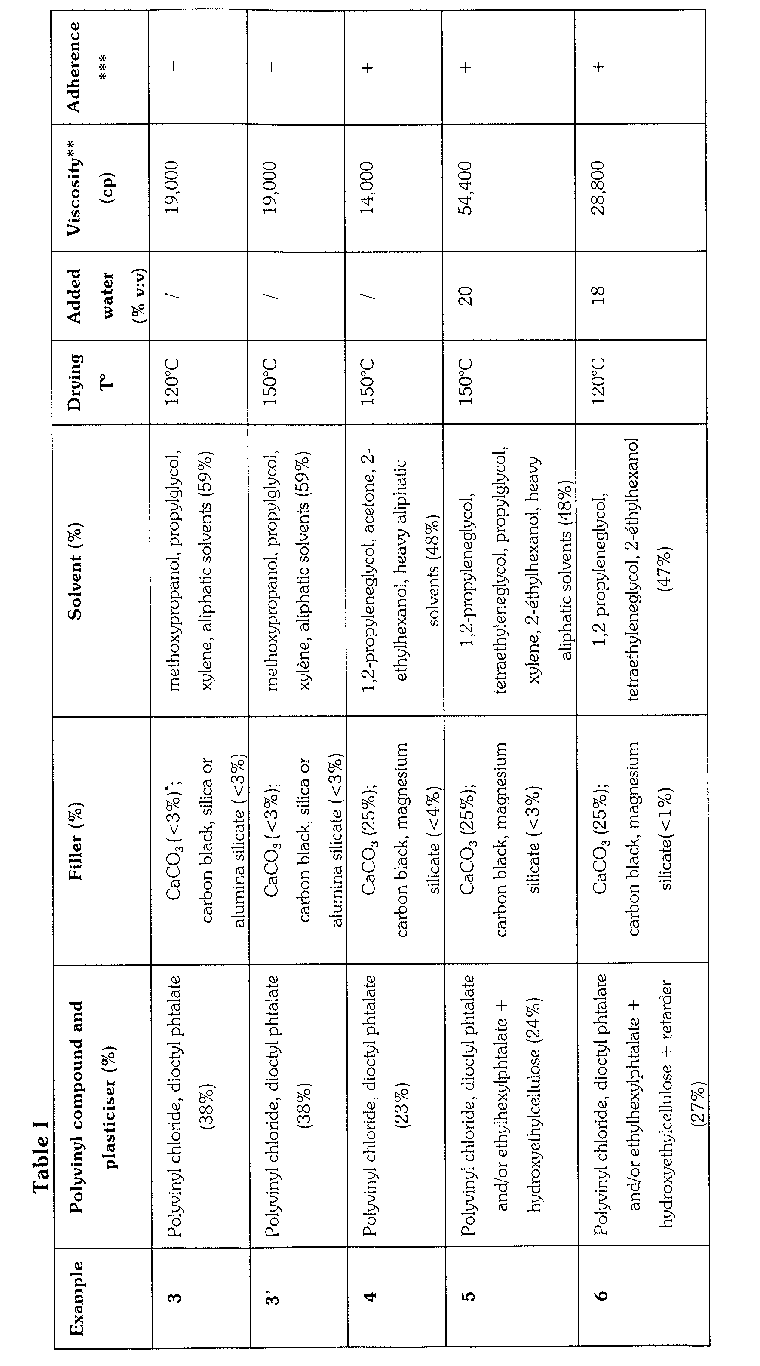

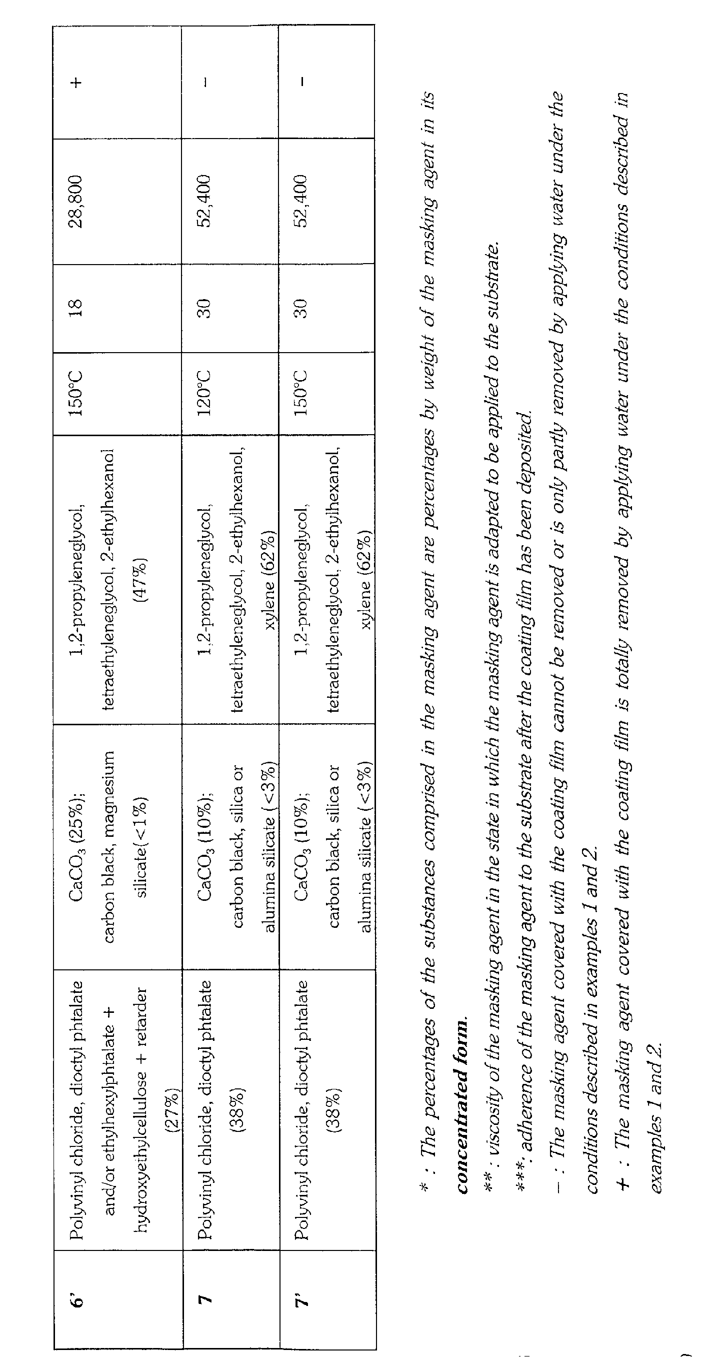

## Claims

1. A method of forming a coating film at part of a surface of a substrate comprising in sequence the steps of applying a masking agent over part but not the whole surface of the substrate, depositing the coating film over at least part of the surface of the substrate which is covered by the masking agent and over at least part of the surface of the substrate which is free of the masking agent, removing the masking agent which is covered by the coating film from the substrate, so as to provide a portion of the substrate substantially free of the coating film, **characterised in that** the masking agent comprises one or more substances which are selected from the group consisting of polyvinyl chloride, polyvinyl acetate, polybutylmetacrylate and latex.

2. A method of forming a coating film at part of a surface of a substrate comprising in sequence the steps of applying a masking agent over part but not the whole surface of the substrate, depositing the coating film over at least part of the surface of the substrate which is covered by the masking agent and over at least part of the surface of the substrate which is free of the masking agent, removing the masking agent which is covered by the coating film from the substrate, so as to provide a portion of the substrate substantially free of the coating film, **characterised in that** the masking agent is in a gel state when it is removed from the substrate.

3. A method of forming a coating film at part of a surface of a substrate comprising in sequence the steps of applying a masking agent over part but not the whole surface of the substrate, depositing the coating film over at least part of the surface of the substrate which is covered by the masking agent and over at least part of the surface of the substrate which is free of the masking agent, removing the masking agent which is covered by the coating film from the substrate, so as to provide a portion of the substrate substantially free of the coating film, **characterised in that** the masking agent comprises an emulsion.

4. A method according to any preceding claim wherein the masking agent comprises at least 10% by weight of a filler.

5. A method of forming a coating film at part of a surface of a substrate comprising in sequence the steps of applying a masking agent over part but not the whole surface of the substrate, depositing the coating film over at least part of the surface of the substrate which is covered by the masking agent and over at least part of the surface of the substrate which is free of the masking agent, removing the masking agent which is covered by the coating film from the substrate, so as to provide a portion of the substrate substantially free of the coating film, **characterised in that** the masking agent comprises a resin and at least 10% by weight of a filler.

6. A method according to Claims 4 and 5 in which the filler comprises calcium carbonate.

7. A method according to any preceding claim wherein the masking agent comprises less than 40% by weight of a polyvinyl compound.

8. A method according to any preceding claim in which the masking agent comprises a latex which comprises a styrene-butadiene copolymer.

9. A method according to any preceding claim wherein the masking agent comprises a hydroxyalkyl cellulose.

10. A method according to any preceding claim wherein the masking agent comprises a plasticiser.

11. A method according to Claim 10 in which the plasticiser is a dialkylphtalate.

12. A method according to any preceding claim wherein the masking agent comprises a solvent selected from the group consisting of alcohol solvents, aliphatic solvents, aromatic solvents, water and combinations of two or more of these solvents.

13. A method according to any preceding claim wherein the masking agent has a viscosity between 14,000 and 55,000 centipoises.

14. A method according to any preceding claim wherein the masking agent is applied to the substrate by passing it through a screen which has certain areas which are blocked to provide a pattern.

15. A method according to any preceding claim in which the masking agent which is covered by the coating film is removed by application of water.

16. A method according to claim 15 in which the masking agent which is covered by the coating film is removed by application of water through one or more nozzle(s) at a pressure of less than 25 bars.

17. A method according to any preceding claim in which at least 80% by weight of the masking agent breaks into small fragments or pieces which have preferably a surface of less than 10 square millimeter, more preferably less than 5 square millimeter.

18. A method according to any preceding claim in which the coating film is deposited under vacuum.

19. A method according to any preceding claim in which the coating film is a solar-control coating film.

20. A method according to any preceding claim wherein the substrate is a glass sheet.

21. A method according to any preceding claim in which the method is used to manufacture a glazing panel which has a substantially non-coated peripheral portion.
